# EUROPEAN PATENT APPLICATION

(11) **EP 4 730 623 A1**
(43) Date of publication of application: **22.04.2026**
(21) Application number: 24823225.8
(22) Date of filing: 28.05.2024
(51) Int. Cl.: H02K 5/22, F02C 6/00, F02C 7/32, H02K 7/18

(54) **GENERATOR AND GAS TURBINE ENGINE PROVIDED WITH SAME**

(30) Priority: 14.06.2023 JP 2023098124
(71) Applicant: KAWASAKI JUKOGYO KABUSHIKI KAISHA, Kobe-shi, Hyogo 650-8670 (JP)
(72) Inventor: SHIBAYAMA, Yoshiyasu, Kobe-shi, Hyogo 650-8670 (JP); MAESATO, Hikaru, Kobe-shi, Hyogo 650-8670 (JP); OKUWA, Tatsuya, Kobe-shi, Hyogo 650-8670 (JP)
(74) Representative: Dantz, Jan Henning
(86) International application number: PCT/JP2024/019549
(87) International publication number: WO 2024/257605

(57) **Abstract**

A power generator is for use in a gas turbine engine. The power generator includes: a stator including a stator core and a power line wound around the stator core; a rotor located inside the stator; and a case that accommodates the stator and the rotor. The power line includes a neutral point of a star connection. The neutral point is located outside the case.

## Description

### Technical Field

The present disclosure relates to a power generator and a gas turbine engine including the same.

### Background Art

As disclosed in Patent Literature 1, in the internal space of a casing of a gas turbine engine, for example, a power generator that generates electric power to be fed to electric auxiliary equipment included in the engine is installed.

### Citation List

### Patent Literature

PTL 1: Japanese Patent No. 7174169

### Summary of Invention

### Technical Problem

Since the gas turbine engine includes multiple components such as a compressor, a combustor, a turbine, etc., the installation space for the power generator is limited in the gas turbine engine.

In view of the above, an object of one aspect of the present disclosure is, in a gas turbine engine including a power generator, to increase the degree of freedom in terms of the installation of the power generator.

### Solution to Problem

One aspect of the present disclosure is a power generator for use in a gas turbine engine, the power generator including: a stator including a stator core and a power line wound around the stator core; a rotor located inside the stator; and a case that accommodates the stator and the rotor. The power line includes a neutral point of a star connection, and the neutral point is located outside the case.

### Advantageous Effects of Invention

One aspect of the present disclosure makes it possible, in a gas turbine engine including a power generator, to increase the degree of freedom in terms of the installation of the power generator.

### Brief Description of Drawings

FIG. 1 schematically shows a gas turbine engine according to an embodiment.
FIG. 2 shows a power generator of FIG. 1 and its peripheral configuration.
FIG. 3 shows a power generator according to Variation 1 and its peripheral configuration.
FIG. 4 schematically shows a gas turbine engine according to Variation 2.

### Description of Embodiments

Hereinafter, embodiments are described with reference to the drawings. In the present disclosure, the meanings of the terms used therein are defined as follows unless otherwise specified. The term "axial direction" means the axial direction of a rotating shaft of a gas turbine engine. The term "forward" means the upstream side in a flow direction of air in the gas turbine engine. The term "backward" means the downstream side in the flow direction. In other words, "forward" means, in the axial direction, the side on which a fan is located. "Backward" means, in the axial direction, the side opposite the side on which the fan is located. "Radial direction" means the direction orthogonal to the axial direction. "Circumferential direction" means the direction about the rotational axis of the rotating shaft.

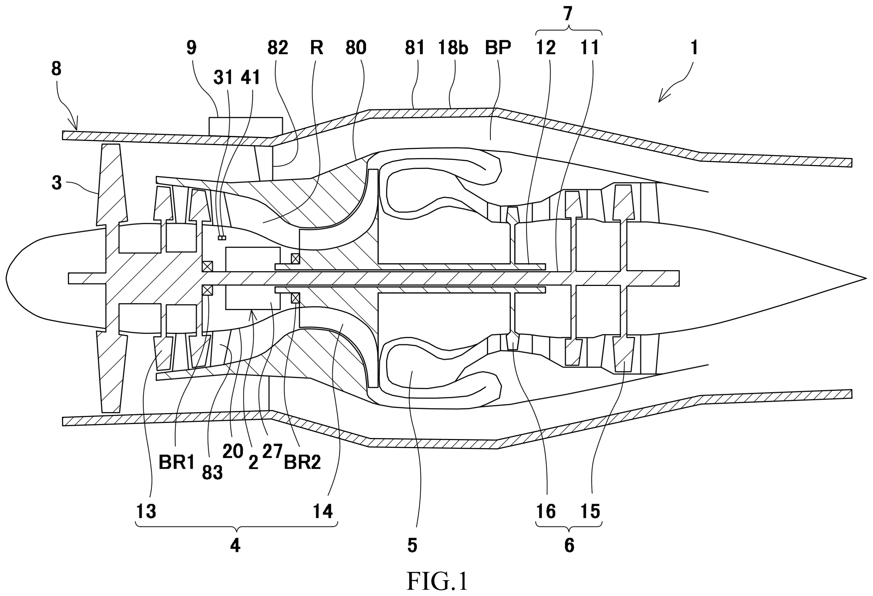

FIG. 1 schematically shows a gas turbine engine 1 (which may be hereinafter simply referred to as "engine 1") according to one embodiment. As one example, the engine 1 is a gas turbine engine for use in an aircraft. However, the engine 1 is not limited to use in aircraft applications. As shown in FIG. 1, the engine 1 includes a power generator 2.

The internal space of a gas turbine engine is limited. Accordingly, there is a case where it is difficult to install a power generator at a desired location within the engine. In the case of a small-size gas turbine engine, the internal space of the engine is more limited.

On the other hand, in the engine 1, a power line 29 of the power generator 2 includes a neutral point 29d of a star connection. The neutral point 29d is located outside a case 27 of the power generator 2. Accordingly, even in a case where the installation space for the power generator 2 in the engine 1 is limited, the degree of freedom in terms of the installation of the power generator 2 can be increased.

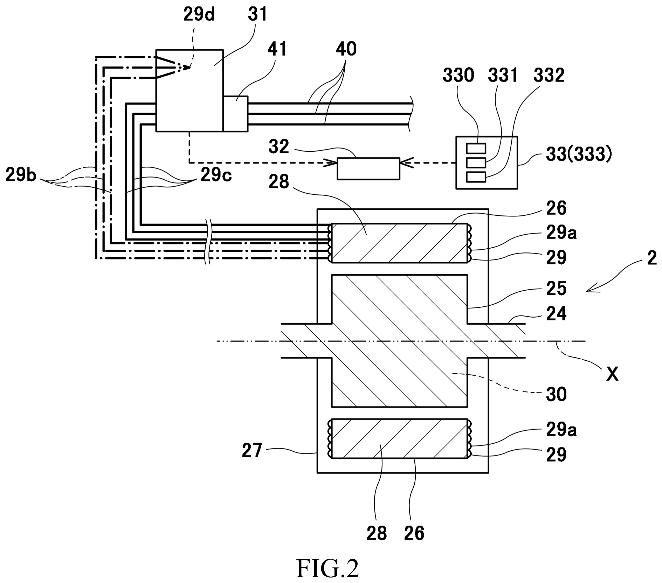

The engine 1 is a two-shaft gas turbine engine. However, the engine 1 is not limited to a two-shaft gas turbine engine. The engine 1 includes: a fan 3; a compressor 4; a combustor 5; a turbine 6; a rotating shaft 7, which mechanically connects the compressor 4 to the turbine 6; a casing 8, which accommodates the compressor 4, the combustor 5, and the turbine 6; and at least one piece of electric auxiliary equipment 9. The compressor 4 compresses air that is fed from the outside to the inside of the engine 1 by the fan 3. The combustor 5 combusts fuel and generates combustion gas. The turbine 6 is fed with the combustion gas generated by the combustor 5. The rotating shaft 7 extends in the forward-backward direction of the engine 1, and is rotated about a predetermined rotational axis X (see FIG. 2). The rotating shaft 7 is rotatably supported by bearings BR1 and BR2. The fan 3 is mechanically connected to the rotating shaft 7, and rotates together with the rotating shaft 7. The fan 3, the compressor 4, the combustor 5, and the turbine 6 are sequentially located in this order from the forward side to the backward side.

The compressor 4 includes a low-pressure compressor 13 and a high-pressure compressor 14. The high-pressure compressor 14 is located backward of the low-pressure compressor 13. The low-pressure compressor 13 is an axial-flow compressor. The high-pressure compressor 14 is a centrifugal compressor. However, the low-pressure compressor 13 and the high-pressure compressor 14 are not limited to these types. The turbine 6 includes a low-pressure turbine 15 and a high-pressure turbine 16. The high-pressure turbine 16 is located forward of the low-pressure turbine 15. The rotating shaft 7 includes: a low-pressure shaft 11, which couples the low-pressure compressor 13 to the low-pressure turbine 15; and a high-pressure shaft 12, which couples the high-pressure compressor 14 to the high-pressure turbine 16. The high-pressure shaft 12 is a hollow cylindrical body extending in the forward-backward direction. The low-pressure shaft 11 extends through the inside of the high-pressure shaft 12. The low-pressure turbine 15 is coupled to the fan 3 via the low-pressure shaft 11.

The casing 8 is a cylindrical body extending in the axial direction of the rotational axis X. The casing 8 accommodates the fan 3, the compressor 4, the combustor 5, the turbine 6, and the rotating shaft 7. The casing 8 includes an inner shell 80, an outer shell 81, and struts 82 and 83. The inner shell 80 accommodates the compressor 4, the combustor 5, and the turbine 6. In a state where the outer shell 81 is spaced apart from the inner shell 80 radially outward, the outer shell 81 is located concentrically with the inner shell 80. There is a tubular bypass passage BP between the inner shell 80 and the outer shell 81. Part of the air sucked into the engine 1 by the fan 3 flows through the bypass passage BP, and is then discharged backward. The electric auxiliary equipment 9 is mounted to the outer peripheral surface of the casing 8. Alternatively, the electric auxiliary equipment 9 may be mounted within the casing 8. For example, the electric auxiliary equipment 9 may be, but not limited to, power consumption equipment such as a fuel pump and a lubricating oil pump.

The strut 82 extends in the radial direction, and couples the inner shell 80 and the outer shell 81. The strut 82 is located backward of the low-pressure compressor 13. The strut 82 may be located between the low-pressure compressor 13 and the high-pressure compressor 14 in the axial direction.

The engine 1 further includes a cylindrical body 20, which, within the inner shell 80, connects the low-pressure compressor 13 and the high-pressure compressor 14 in the axial direction. The cylindrical body 20 decreases in both external and internal diameters from the forward side to the backward side. The cylindrical body 20 defines part of a compressed air passage R, which extends from the low-pressure compressor 13 toward the high-pressure compressor 14. The outer peripheral surface of the cylindrical body 20 faces the compressed air passage R. The strut 83 extends in the radial direction, and couples the cylindrical body 20 and the inner shell 80. The strut 83 is located backward of the low-pressure compressor 13. The strut 83 may be located between the low-pressure compressor 13 and the high-pressure compressor 14 in the axial direction.

The power generator 2 generates electric power when driven by the rotational driving force of the rotating shaft 7. The electric power generated by the power generator 2 is fed to the electric auxiliary equipment 9 to drive the electric auxiliary equipment 9. The power generator 2 may have a starter function to drive the rotation of the engine shaft 7 at the start of the engine 1. In this case, the power generator 2 is a motor generator. The power generator 2 is located within the casing 8. The power generator 2 is located within the cylindrical body 20 and forward of the high-pressure compressor 14.

FIG. 2 shows the power generator 2 of FIG. 1 and its peripheral configuration. In FIG. 2, the inside of the power generator 2 and the neutral point 29d of the power line 29 are illustrated. The power generator 2 includes a rotating shaft 24, a rotor 25, a stator 26, the case 27, and a connector 31. The rotating shaft 24 and the rotor 25 are located inside the stator 26. The rotating shaft 24 extends in the axial direction, and is pivotally supported such that the rotating shaft 24 rotates about the rotational axis X. The rotor 25 is a cylindrical body with an internal space extending in the axial direction of the rotational axis X. The rotating shaft 24 extends through the internal space of the rotor 25. The rotor 25 is coupled to the rotating shaft 24, and rotates about the rotational axis X together with the rotating shaft 24. The rotor 25 is surrounded by the stator 26 in the circumferential direction about the rotational axis X. The rotor 25 includes a permanent magnet 30. That is, the power generator 2 is of a permanent magnet type. The power generator 2 is of a three-phase alternating current type, i.e., generates three-phase AC power including U-, V-, and W-phases.

The stator 26 includes: at least one stator core 28 located around the rotational axis X; and the power line 29 wound around the stator core 28. The stator 26 herein includes multiple stator cores 28. The case 27 accommodates the stator 26 and the rotor 25. The case 27, as one example, covers the stator 26 and the rotor 25 from the radially outer side and from both sides in the axial direction.

The power line 29 is a three-phase winding. The power line 29 includes winding portions 29a wound around the stator cores 28. The winding portions 29a are coiled portions. The winding portions 29a include U-phase, V-phase, and W-phase winding portions. The winding portions 29a are wound around the stator cores 28. The power line 29 is wound around each stator core 28 via a sheet-shaped insulator. In this manner, the power line 29 and each stator core 28 are insulated from each other.

The power line 29 includes: first lead wires 29b extending from one end of each of the winding portions 29a; and second lead wires 29c extending from the other end of each of the winding portions 29a. The first lead wires 29b are star-connected, i.e., Y-connected. As a result, the power line 29 includes the neutral point 29d, which is an electrical neutral point. The second lead wires 29c are, outside the case 27, electrically connected to wiring 40, which will be described below. The connector 31 is mounted to the power line 29. The connector 31 is mounted to the second lead wires 29c.

In the power generator 2, at least while the engine 1 is being driven, the Y connection state via the neutral point 29d is maintained. In the power generator 2, the neutral point 29d is located outside the case 27. In the power generator 2, the first lead wires 29b and the second lead wires 29c are located outside the case 27 together with the neutral point 29d.

The neutral point 29d may be located outside the case 27 in the direction orthogonal to the rotational axis X of the rotor 25. The neutral point 29d may be located outside the case 27 in the axial direction in which the rotational axis X of the rotor 25 extends.

The neutral point 29d may be spaced apart from the case 27. As one example, the neutral point 29d may be located on the opposite side of a wall of the case 27 from either end of the winding portions 29a in the axial direction.

The neutral point 29d may be located forward of the combustor 5. The neutral point 29d may be located in a region having a lower temperature than a region of the case 27 of the engine 1 where the highest temperature occurs while the engine 1 is being driven. As one example, the neutral point 29d is located in a region having a lower temperature, by at least 100°C, than the region of the case 27 of the engine 1 where the highest temperature occurs while the engine 1 is being driven.

The engine 1 includes: the wiring 40, with which the electric power generated by the power generator 2 is fed to the electric auxiliary equipment 9 through the second lead wires 29c; and a connector 41 mounted to the wiring 40. The connector 41 is connected to the connector 31. Accordingly, the wiring 40 is electrically connected to the second lead wires 29c, to which the connector 31 is mounted. The connector 31 includes, as one example, a thermal-resistant resin component.

The neutral point 29d is mounted to the connector 31. As one example, the connector 31 includes an internal space. The neutral point 29d is accommodated in the internal space. In a state where the neutral point 29d is insulated from the second lead wires 29c, the neutral point 29d is mounted to the connector 31. The neutral point 29d need not be grounded.

As one example, the power generator 2 includes a voltage sensor 32, which detects the phase voltage of AC power of any phase of three-phase AC power outputted from the power line 29, which is a three-phase winding. The voltage sensor 32 detects, as the phase voltage, the voltage between the neutral point 29d and any of the first lead wires 29b of the power line 29. The voltage sensor 32 is connected to processing circuitry 33 included in the engine 1. The processing circuitry 33 is configured to receive a detection signal from the voltage sensor 32. As one example, based on the detection signal from the voltage sensor 32, the processing circuitry 33 calculates the rotation speed of the power generator 2. Thus, according to the configuration to detect the phase voltage, as compared to a configuration to detect a line-to-line voltage, the rotation speed of the power generator 2 can be measured at a lower voltage. This makes it possible to avoid the occurrence of insulation breakdown when detecting the voltage with the voltage sensor 32.

As one example, the processing circuitry 33 is a controller 333, which includes a processor 330, a system memory 331, and a storage memory 332. The controller 333 receives the detection signal from the voltage sensor 32. The storage memory 332 stores a control program to be executed by the processor 330. The processor 330 executes the control program, which has been read from the storage memory 332 and loaded into the system memory 331, to calculate the rotation speed.

As described above, since the neutral point 29d of the power line 29 of the power generator 2 is located outside the case 27, the neutral point 29d can be located in an arbitrary space within the engine 1. Further, it is not necessary for the case 27 to have a space for accommodating the neutral point 29d. This makes it possible to reduce the size of the case 27. Consequently, the degree of freedom in terms of the installation of the power generator 2 in the engine 1 can be increased.

Since the first lead wires 29b and the second lead wires 29c are located outside the case 27, the case 27 can be further reduced in size.

In a case where the neutral point 29d is located in a region having a lower temperature than the region of the case 27 of the engine 1 where the highest temperature occurs while the engine 1 is being driven, more options for usable insulators become available. That is, an insulator with a lower heat-resistance temperature can be used.

### (Variations)

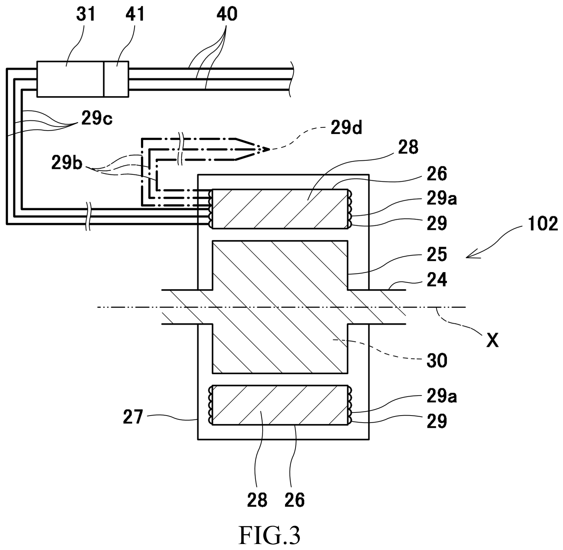

Hereinafter, variations of the present disclosure are described focusing on differences from the above embodiment. FIG. 3 shows a power generator 102 according to Variation 1 and its peripheral configuration. As shown in FIG. 3, the neutral point 29d of Variation 1 is not mounted to the connector 31 and is spaced apart from the case 27. That is, the neutral point 29d is spaced apart from both the connector 31 and the case 27. The neutral point 29d is located outside the case 27 in the direction orthogonal to the rotational axis X.

The neutral point 29d may be located outside the case 27 in the axial direction in which the rotational axis X extends. The neutral point 29d may be mounted to the case 27. The neutral point 29d may be mounted to the case 27 via a support.

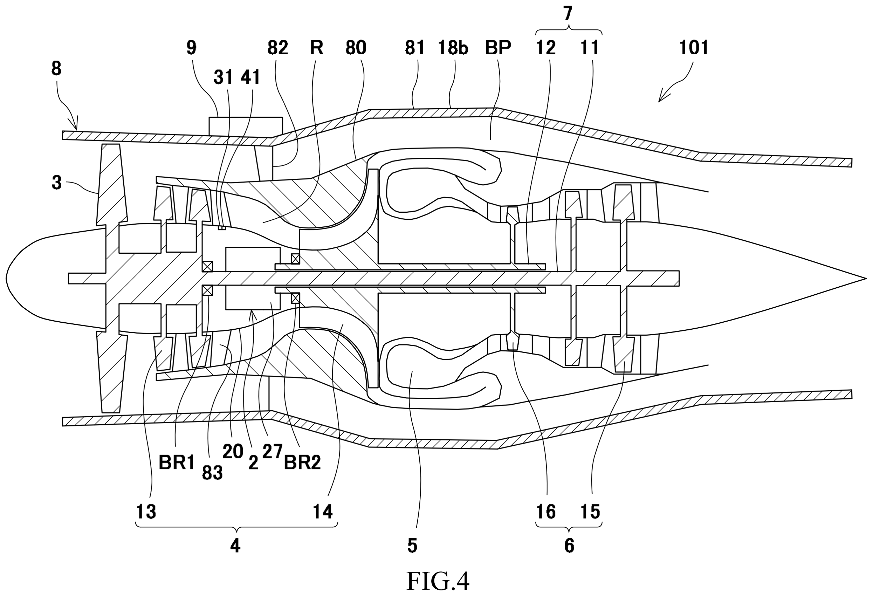

FIG. 4 schematically shows a gas turbine engine 101 according to Variation 2. As shown in FIG. 4, the connector 31 of Variation 2 is mounted to the cylindrical body 20. In a state where the neutral point 29d is mounted to the connector 31, the neutral point 29d is mounted to the inner peripheral surface of the cylindrical body 20. In a state where the neutral point 29d is mounted to the connector 31, the neutral point 29d may be mounted to the cylindrical body 20 via a support. Alternatively, the neutral point 29d may be mounted to the cylindrical body 20 independently of the connector 31.

Although the rotational axis X in the above-described embodiment coincides with the rotational axis of the rotating shaft 7, the rotational axis X need not coincide with the rotational axis of the rotating shaft 7. The case 27 may be configured by using a single component or multiple components. One example of the aforementioned "region having a lower temperature" of the engine 1 may be, but not limited to, a region that is located forward of the case 27. For example, by recognizing, in advance, temperature changes of the case 27 and its surroundings while the engine 1 is being driven, it is possible to confirm which region of the engine 1 can be selected as the "region having a lower temperature". The voltage sensor 32 may be used also for purposes other than calculating the rotation speed of the power generator 2. The neutral point 29d may be mounted to, for example, the outer surface of the connector 31. In such a case where the neutral point 29d is not accommodated in the connector 31, the connector 31 can be reduced in size.

In the axial direction of the rotational axis X, the case 27 may cover at least part of each of the stator 26 and the rotor 25 from one of or both sides in the axial direction. Both sides of the case 27 in the axial direction of the rotational axis X may be open. In this case, the internal space of the case 27 is the space that is defined by the case 27 from one end to the other end of the case 27 in the axial direction of the rotational axis X.

### (Disclosure Items)

The following items each disclose a preferred embodiment.

### [Item 1]

A power generator for use in a gas turbine engine, the power generator including: a stator including a stator core and a power line wound around the stator core; a rotor located inside the stator; and a case that accommodates the stator and the rotor, wherein the power line includes a neutral point of a star connection, and the neutral point is located outside the case.

According to the above configuration, since the neutral point is located outside the case, the case and the neutral point can be located in separate spaces, respectively. As a result, in the gas turbine engine, the degree of freedom in terms of the installation of the power generator can be increased. Consequently, even in a case where the installation space for the power generator is limited in the gas turbine engine, the power generator can be readily installed.

### [Item 2]

The power generator according to item 1, wherein the neutral point is located outside the case in a direction orthogonal to a rotational axis of the rotor.

According to the above configuration, even in a case where the installation space for the power generator is insufficient in the axial direction in which the rotational axis of the rotor extends, the power generator can be readily installed in the gas turbine engine. Further, the neutral point can be spaced apart from the rotational axis of the rotor in the orthogonal direction. As a result, while the gas turbine engine is being driven, vibration or heat from the rotor can be suppressed from reaching the neutral point.

### [Item 3]

The power generator according to item 1 or 2, wherein the neutral point is located outside the case in an axial direction in which a rotational axis of the rotor extends.

According to the above configuration, even in a case where the installation space for the power generator is insufficient in the direction orthogonal to the rotational axis of the rotor, the power generator can be readily installed in the gas turbine engine. In a case where the power generator is installed around the rotating shaft of the gas turbine engine, if the neutral point is located forward of the case, vibration or heat from the rotor can be suppressed from reaching the neutral point while the gas turbine engine is being driven.

### [Item 4]

The power generator according to any one of items 1 to 3, wherein the neutral point is spaced apart from the case.

According to the above configuration, while the gas turbine engine is being driven, vibration or heat from the case can be suppressed from reaching the neutral point. In addition, the degree of freedom in terms of the layout of the power generator in the gas turbine engine can be increased.

### [Item 5]

The power generator according to any one of items 1 to 4, further including a connector mounted to the power line, wherein the neutral point is mounted to the connector.

According to the above configuration, by mounting the neutral point to the connector mounted to the power line, the neutral point can be readily positioned in relation to the case. Also, for example, in the case of accommodating the neutral point in an internal space of the connector, the neutral point can be protected from outside. Further, for example, in the case of fixing the connector to the gas turbine engine, the neutral point can be readily positioned in relation to the gas turbine engine.

### [Item 6]

The power generator according to any one of items 1 to 5, wherein the rotor includes a permanent magnet.

According to the above configuration, the power generator can be configured as a power generator of a permanent magnet type. As a result, the power generator can be made more compact than, for example, an induction generator.

### [Item 7]

The power generator according to any one of items 1 to 6, wherein the power line is a three-phase winding, and the power generator further includes a voltage sensor that detects a phase voltage of AC power of any phase of three-phase AC power outputted from the three-phase winding.

According to the above configuration, the occurrence of insulation breakdown when detecting the voltage with the voltage sensor can be suppressed compared to a case where a line-to-line voltage is detected with the voltage sensor. Accordingly, for example, the rotation speed of the power generator can be measured at a lower voltage by using the voltage sensor.

### [Item 8]

A gas turbine engine including: a compressor; a combustor that generates combustion gas; a turbine that is fed with the combustion gas from the combustor; a rotating shaft that mechanically connects the compressor to the turbine; a casing that accommodates at least the compressor and the combustor; and the power generator according to any one of items 1 to 7, the power generator being located in an internal space between the compressor and the rotating shaft and mechanically connected to the rotating shaft.

According to the above configuration, even in a case where the installation space for the power generator is limited due to the multiple components included in the gas turbine engine, the power generator can be readily installed.

### [Item 9]

The gas turbine engine according to item 8, wherein the neutral point is located forward of the combustor.

According to the above configuration, while the gas turbine engine is being driven, heat from the combustor can be suppressed from reaching the neutral point.

### [Item 10]

The gas turbine engine according to item 8 or 9, wherein the neutral point is located forward of the case.

According to the above configuration, even in a case where the installation space for the power generator is insufficient in the radial direction of the rotating shaft, the power generator can be readily installed in the gas turbine engine. Further, since the neutral point is located forward of the case, vibration or heat from the case can be suppressed from reaching the neutral point while the gas turbine engine is being driven.

### [Item 11]

The gas turbine engine according to any one of items 8 to 10, wherein the neutral point is spaced apart from the case in a radial direction of the rotating shaft.

According to the above configuration, even in a case where the installation space for the power generator is insufficient in the axial direction of the rotating shaft, the power generator can be readily installed in the gas turbine engine. Further, since the neutral point is spaced apart from the case in the radial direction of the rotating shaft, heat or vibration from the case or the rotating shaft can be suppressed from reaching the neutral point while the gas turbine engine is being driven.

### [Item 12]

The gas turbine engine according to any one of items 8 to 11, wherein the neutral point is located in a region having a lower temperature than a region of the case where a highest temperature occurs.

According to the above configuration, since the neutral point is located in the region having a lower temperature than the region of the case of the engine where the highest temperature occurs, the influence of heat from the gas turbine engine on the neutral point can be suppressed while the gas turbine engine is being driven. Further, since the influence of heat on the neutral point is suppressed, for example, covering members other than those having high thermal resistance are also usable as a covering member to cover the power line. This makes it possible to increase the degree of freedom in selecting or designing the covering member.

### Reference Signs List

- X: rotational axis
- 1, 101: gas turbine engine
- 2, 102: power generator
- 3: fan
- 4: compressor
- 5: combustor
- 6: turbine
- 7: rotating shaft
- 8: casing
- 25: rotor
- 26: stator
- 27: case
- 29: power line
- 29d: neutral point
- 30: permanent magnet
- 31: connector

## Claims

1. A power generator for use in a gas turbine engine, the power generator comprising:
a stator including a stator core and a power line wound around the stator core;
a rotor located inside the stator; and
a case that accommodates the stator and the rotor, wherein
the power line includes a neutral point of a star connection, and
the neutral point is located outside the case.

2. The power generator according to claim 1, wherein
the neutral point is located outside the case in a direction orthogonal to a rotational axis of the rotor.

3. The power generator according to claim 1 or 2, wherein
the neutral point is located outside the case in an axial direction in which a rotational axis of the rotor extends.

4. The power generator according to any one of claims 1 to 3, wherein
the neutral point is spaced apart from the case.

5. The power generator according to any one of claims 1 to 4, further comprising a connector mounted to the power line, wherein
the neutral point is mounted to the connector.

6. The power generator according to any one of claims 1 to 5, wherein
the rotor includes a permanent magnet.

7. The power generator according to any one of claims 1 to 6, wherein
the power line is a three-phase winding, and
the power generator further comprises a voltage sensor that detects a phase voltage of AC power of any phase of three-phase AC power outputted from the three-phase winding.

8. A gas turbine engine comprising:
a compressor;
a combustor that generates combustion gas;
a turbine that is fed with the combustion gas from the combustor;
a rotating shaft that mechanically connects the compressor to the turbine;
a casing that accommodates at least the compressor and the combustor; and
the power generator according to any one of claims 1 to 7, the power generator being located in an internal space between the compressor and the rotating shaft and mechanically connected to the rotating shaft.

9. The gas turbine engine according to claim 8, wherein
the neutral point is located forward of the combustor.

10. The gas turbine engine according to claim 8 or 9, wherein
the neutral point is located forward of the case.

11. The gas turbine engine according to any one of claims 8 to 10, wherein
the neutral point is spaced apart from the case in a radial direction of the rotating shaft.

12. The gas turbine engine according to any one of claims 8 to 11, wherein
the neutral point is located in a region having a lower temperature than a region of the case where a highest temperature occurs.
